(19) Europäisches Patentamt
European Patent Office
Office européen des brevets

(11) Numéro de publication : **0 350 391 B1**

(12) # FASCICULE DE BREVET EUROPEEN

(45) Date de publication du fascicule du brevet : **02.06.93 Bulletin 93/22**

(51) Int. Cl.$^5$ : **C09K 11/79**, G21K 4/00

(21) Numéro de dépôt : **89401915.7**

(22) Date de dépôt : **04.07.89**

(54) **Monocristaux de silicates de lanthanides utilisables comme scintillateurs pour la détection des rayonnements X et gamma.**

(30) Priorité : **06.07.88 FR 8809152**

(43) Date de publication de la demande : **10.01.90 Bulletin 90/02**

(45) Mention de la délivrance du brevet : **02.06.93 Bulletin 93/22**

(84) Etats contractants désignés : **DE GB IT NL**

(56) Documents cités :
**DE-A- 3 303 166**
**CHEMICAL ABSTRACTS, vol. 110, no. 20, 1989, page 554, résumé no. 181419b, Columbus, Ohio, US; & JP-A-63 307 380 (HITACHI CHEMICAL CO., LTD) 15-12-1988**

(73) Titulaire : **COMMISSARIAT A L'ENERGIE ATOMIQUE**
**31/33, rue de la Fédération**
**F-75015 Paris Cédex 15 (FR)**

(72) Inventeur : **Francois, Bernard**
**119 rue Antoine de St Exupéry**
**F-38340 Voreppe (FR)**
Inventeur : **Navizet, Monique**
**Hameau du Quâ**
**F-38120 Proveyzieux (FR)**
Inventeur : **Rebreyend, Jean-Claude**
**Lolette Lans en Vercors**
**F-38250 Villard de Lans (FR)**
Inventeur : **Wyon, Christophe**
**5 rue du Drac**
**F-38120 Saint Egreve (FR)**

(74) Mandataire : **Mongrédien, André et al**
**c/o BREVATOME 25, rue de Ponthieu**
**F-75008 Paris (FR)**

EP 0 350 391 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet des monocristaux de silicates de lanthanides, utilisables comme scintillateur pour la détection des rayonnements X ou gamma.

Elle concerne en particulier la réalisation de scintillateurs trouvant des applications pour la tomographie d'émission de positons en imagerie médicale ou en contrôle non destructif d'objets tels que des containers de déchets nucléaires, ainsi que pour la prospection pétrolière.

Un scintillateur est un matériau qui permet de convertir un rayonnement X et/ou gamma en un rayonnement de photons de plus basse énergie, particulièrement bien adapté à la bande passante des photomultiplicateurs.

Parmi les matériaux utilisables comme scintillateurs, on a développé récemment des oxydes mixtes de silicium, en particulier des oxyorthosilicates de terres rares de formule :

$$Gd_{2(1-x-y)}Ln_{2x}Ce_{2y}SiO_5$$

dans laquelle Ln est Y et/ou La, et x et y sont tels que

$$0 \leqq x \leqq 0,5$$

$$1.10^{-3} \leqq y \leqq 0,1,$$

comme il est décrit dans le brevet américain US-A-4 647 781.

Les performances d'un tel matériau peuvent être estimées à partir des paramètres suivants.

- d : densité du matériau,
- Z : n° atomique effectif,
- I : intensité lumineuse de scintillation,
  et
- v : vitesse de décroissance de la luminescence,

qui permettent de définir la figure de mérite $F=dZ^5I/v$.

Dans cette figure de mérite F, la valeur $dZ^5$ caractérise le coefficient d'absorption du rayonnement X et/ou gamma, et le facteur I/v est caractéristique de l'ion luminescent et de l'environnement cristallographique de cet ion.

Les scintillateurs formés de ces oxyorthosilicates de terres rares donnent des résultats satisfaisants, notamment pour les applications en tomographie d'émission de positons. Toutefois, il serait intéressant d'améliorer encore leurs performances, notamment d'obtenir une décroissance de la luminescence plus rapide et/ou une intensité d'émission plus élevée.

La présente invention a précisément pour objet de nouveaux monocristaux de silicates de terres rares, utilisables comme scintillateurs, qui permettent d'obtenir des performances améliorées par rapport à celles que l'on obtient avec les oxyorthosilicates connus.

Selon l'invention, le monocristal de silicates de lanthanides utilisable comme scintillateur pour la détection des rayonnements X et/ou gamma, se caractérisé en ce que le silicate de lanthanides répond à la formule :

$$(Ln_{1-x_1-x_2-x_3}Ln'_{x_1}Ce_{x_2}Tb_{x_3})_{9,33}(SiO_4)_6O_2$$

dans laquelle Ln et Ln' qui sont différents, représentent un élément des terres rares choisi parmi La, Gd, Yb et Lu, et $x_1$, $x_2$ et $x_3$ sont tels que

$$0 \leqq x_1 < 1$$

$$0 \leqq x_2 \leqq 0,05$$

$$0 \leqq x_3 \leqq 0,05$$

$$0 < x_2 + x_3 \leqq 0,1$$

$$0 < x_1+x_2+x_3 < 1.$$

Selon un premier mode de réalisation de l'invention $x_1$ et $x_3$ sont égaux à 0. Dans ce cas, le silicate de lanthanides répond à la formule :

$$(Ln_{1-x_2}Ce_{x_2})_{9,33}(Sio_4)_6O_2$$

dans laquelle $x_2$ est tel que $0 < x_2 \leqq 0,05$, de préférence tel que $0,005 \leqq x_2 \leqq 0,02$.

A titre d'exemple, $x_2$ peut aller de 0,01 à 0,011, ce qui correspond à un silicate de formule :

$$Ln_{9,23}Ce_{0,1}(SiO_4)_6O_2$$

Ces silicates ont une longueur d'onde d'émission située à environ 410nm à la température ambiante.

Selon un second mode de réalisation de l'invention, $x_1$=0. Dans ce cas, le silicate de lanthanide répond à la formule :

$$(Ln_{1-x_2-x_3}Ce_{x_2}Tb_{x_3})_{9,33}(SiO_4)_6O_2$$

dans laquelle Ln présente un élément des terres rares choisi parmi La, Gd, Yb et Lu et $x_2$ et $x_3$ sont tels que

$$0 < x_2 \leqq 0{,}05$$
$$0 < x_3 \leqq 0{,}05$$

de préférence tels que :

$$0{,}003 \leqq x_2 \leqq 0{,}01$$
$$0{,}005 \leqq x_3 \leqq 0{,}02$$

A titre d'exemple de silicates de terres rares répondant à cette formule, on peut citer ceux pour lesquels $x_2$ va de 0,005 à 0,006 et $x_3$ va de 0,016 à 0,017, comme le silicate répondant à la formule :

$$Ln_{9,13}Ce_{0,05}Tb_{0,15}(SiO_4)_6\ O_2$$

En raison de la présence simultanée de cérium et de terbium, un tel silicate de terres rares a une longueur d'onde d'émission plus élevée se situant dans la gamme allant de 500 à 550nm.

Selon un troisième mode de réalisation de l'invention, $x_3$=0. Dans ce cas, le silicate de lanthanides répond à la formule :

$$(Ln_{1-x_1-x_2}Ln'_{x_1}Ce_{x_2})_{9,33}(SiO_4)_6O_2$$

dans laquelle Ln et Ln′ qui sont différents, représentent un élément des terres rares choisi parmi La, Gd, Yb et Lu, et $x_1$ et $x_2$ sont tels que:

$$0 < x_1 < 1$$
$$0 < x_2 < 0{,}05$$
$$0 < x_1 + x_2 < 1$$

De préférence tels que :

$$0{,}05 \leqq x_1 \leqq 0{,}2$$
$$0{,}005 \leqq x_2 \leqq 0{,}02$$
$$0{,}055 < x_1 + x_2 < 0{,}22$$

A titre d'exemple, $x_1$ peut varier de 0,1 à 0,11 et $x_2$ de 0,01 à 0,011. Un silicate de ce type répond à la formule :

$$Ln_{8,23}Ln'_1Ce_{0,1}(SiO_4)_6O_2$$

Selon un quatrième mode de réalisation de l'invention, $x_1$, $x_2$ et $x_3$ sont tous supérieurs à 0. Dans ce cas, $x_1$, $x_2$ et $x_3$ sont tels que :

$$0 < x_1 < 1$$
$$0 < x_2 \leqq 0{,}05$$
$$0 < x_3 \leqq 0{,}05$$

de préférence tels que

$$0{,}05 \leqq x_1 \leqq 0{,}2$$
$$0{,}003 \leqq x_2 \leqq 0{,}01$$
$$0{,}005 \leqq x_3 \leqq 0{,}02$$

A titre d'exemple, $x_1$ peut varier de 0,1 à 0,11, $x_2$ de 0,05 à 0,06 et $x_3$ de 0,01 à 0,011.

Un silicate de ce type répond à la formule :

$$Ln_{8,18}Ln'_1Ce_{0,05}Tb_{0,1}(SiO_4)_6O_2$$

Ces silicates émettent également dans la gamme de longueurs d'onde allant de 500 à 550nm en raison de la présence simultanée de cérium et de terbium.

Les silicates de terres rares activés au cérium et éventuellement au terbium, utilisés dans l'invention sont des composés connus qui ont une structure de type apatite, comme il est décrit dans l'article de J.J. Lammers et G. Blasse publié dans J. Electrochem. Soc. : Solid-state Science and Technology, 1987, p. 2068-2071. Dans cet article, ces silicates sont préparés sous la forme de poudres et l'on détermine leurs propriétés de luminescence sous excitation par des rayons ultraviolets ou des rayons X ; on étudie également l'oxyorthosilicate $Gd_2SiO_5$ activé au terbium, et les conclusions et cet article montrent que les silicates de l'invention activés au $Ce^{3+}$ et $Tb^{3+}$ sont relativement inefficaces comme matériau luminescent alors que les oxyorthosilicates tels que $Gd_2SiO_5$ sont excellents.

Ainsi, on ne pouvait supposer à la lecture de cet article que des monocristaux des mêmes silicates auraient des performances meilleures comme scintillateurs, que les oxyorthosilicates décrits dans cet article et dans le brevet américain 4 647 781.

Les monocristaux de silicates de lanthanides de l'invention peuvent être préparés à partir d'une poudre de silicate de Lanthanides obtenue par des procédés classiques, par exemple par mélange des oxydes correspondants $Ln_2O_3$, $Ln'_2O_3$, $CeO_2$ ou $Ce_2O_3$, $Tb_2O_3$ et $SiO_2$. Après mélange des poudres, on effectue un traitement

thermique qui permet d'obtenir le silicate de lanthanides conforme à l'invention. La température utilisée est généralement supérieure à 1000°C et elle est choisie en fonction de la nature des oxydes constituants et de leurs proportions.

On peut encore préparer la poudre de silicate de lanthanides par précipitation à partir de composés solubles de $Ln^{3+}$, $Ln'^{3+}$, $Si^{4+}$, $Ce^{n+}$ avec n=3 ou 4 et $Tb^{3+}$ dans un solvant aqueux ou non aqueux. Les sels utilisés peuvent être par exemple des acétates et la précipitation peut être obtenue par addition d'ammoniaque. On transforme ensuite la poudre en monocristal par des procédés classiques de préparation de monocristaux, en particulier par le procédé Czochralski. Dans ce but, on peut placer la poudre dans un creuset, puis la porter à la température de fusion du silicate, à l'abri de l'oxygène de l'air, de manière à former un bain fondu, et préparer un monocristal à partir de ce bain fondu par la méthode de Czochralski en utilisant un germe monocristallin de même composition, taillé parallèlement à la direction cristallographique dite "c" ou à la direction cristallographique dite "a" de la maille hexagonale du silicate. Ce germe est amené au contact du bain, puis remonté lentement vers le haut tout en étant aminé d'un mouvement de rotation sur lui-même de façon à assurer la croissance progressive du monocristal au bout du germe selon la direction imposée par celui-ci.

Cette méthode permet de préparer des monocristaux de grandes dimensions convenant à l'industrie des scintillateurs.

On peut ensuite tailler un parallélépipède dans ce monocristal, puis polir les deux faces terminales et associer ce parallélépipède à un photomultiplicateur pour dénombrer le nombre de photons X et/ou gamma interceptés par une des faces du parallélépipède.

Ainsi, l'invention a également pour objet un détecteur de rayons X et/ou gamma comprenant :

- un scintillateur constitué par un monocristal d'un silicate de lanthanides conforme à l'invention, et
- un photodétecteur pour détecter la lumière provenant du scintillateur.

Dans les monocristaux de silicates de lanthanides de l'invention, on peut adapter les propriétés du scintillateur, en particulier ses propriétés d'émission, en jouant sur les quantités de cérium et éventuellement de terbium ajoutées comme dopants.

Lorsqu'on utilise uniquement du cérium, l'émission du scintillateur a lieu vers 410nm à la température ambiante.

En revanche, lorsqu'on utilise simultanément du cérium et du terbium, l'émission du scintillateur se situe dans la gamme allant de 500 à 550 nm. Dans ce dernier cas, l'intensité de luminescence I est particulièrement élevée.

La quantité de cérium ajoutée a une influence sur la vitesse de décroissance de la luminescence, celle-ci augmentant avec la teneur en cérium et étant toujours supérieure à celle que l'on obtient avec les oxyxorthosilicates du brevet américain US-A-4 647 781.

Selon l'invention, on améliore également les propriétés du scintillateur en substituant partiellement le lanthanide Ln par un autre lanthanide Ln′ de numéro atomique plus élevé, ce qui permet d'augmenter le numéro atomique effectif Z du matériau et sa densité d en améliorant ainsi le coefficient d'absorption du rayonnement X et/ou gamma.

Enfin, les silicates utilisés dans l'invention ont l'avantage de présenter une structure de type apatite qui reste identique et stable depuis la température ambiante jusqu'à la température de fusion du silicate, alors que les oxyorthosilicates de cérium et de lanthane se décomposent avant leur température de fusion. De ce fait, la ségrégation de cérium dans les silicates de lanthanides de l'invention est plus faible que celle observée dans les oxyorthosilicates ; on peut ainsi améliorer la qualité cristalline des échantillons obtenus par la méthode Czochralski et utiliser des quantités plus importantes de cérium pour augmenter la vitesse de décroissance de la luminescence.

D'autres caractéristiques et avantages de l'invention apparaîtront mieux à la lecture des exemples suivants donnés bien entendu à titre illustratif et non limitatif, en référence au dessin annexé sur lequel :

- la figure unique représente schématiquement un dispositif de détection des rayons X et/ou gamma conforme à l'invention.

**Exemple 1** : Monocristal de $Gd_{9,28}Ce_{0,05}(SiO_4)_6O_2$.

On prépare tout d'abord une poudre d'oxyde mixte à partir de $Gd_2O_3$, $SiO_2$ et $CeO_2$ de haute pureté. Dans ce but, on introduit dans un creuset en alumine 556,99g de $Gd_2O_3$, 2,86g de $CeO_2$ et 119,36g de $SiO_2$, et on calcine dans l'air à environ 1500°C pendant 48h, puis on refroidit à la température ambiante. On place ensuite la poudre de silicate ainsi obtenue de formule $Gd_{9,28}CeO_{0,05}(SiO_4)_6O_2$ dans un creuset d'iridium (diamètre : 60 mm, hauteur : 60mm), puis on la porte à sa température de fusion qui est voisine de 1900°C à l'abri de l'oxygène de l'air pour former un bain fondu.

On amène alors au contact du bain un germe monocristallin du même silicate de lanthanides taillé parallèlement à la direction cristallographique dite $\vec{a}$ de la maille hexagonale du composé, puis on le remonte lentement vers le haut tout en l'animant d'un mouvement de rotation sur lui-même. On forme ainsi le monocristal progressivement au bout du germe.

On obtient ainsi un monocristal homogène qui atteint 30mm de long et 70mm de diamètre. On le soumet ensuite à un traitement thermique de recuit à une température de 1200°C en atmosphère d'hydrogène pour réduire les ions cérium tétravalents éventuellement présents dans le cristal en ions cérium trivalents qui sont seuls responsables de la scintillation vers 410nm.

Le monocristal ainsi obtenu présente une vitesse de décroissance de la luminescence de l'ordre de 30ns alors que pour l'oxyorthosilicate de terres rares du brevet US-A- 4 647 781 ayant le même teneur en cérium, la vitesse de décroissance de la luminescence est de l'ordre de 60ns.

**Exemple 2.**

On prépare comme dans l'exemple 1 un monocristal de silicate de lanthanides de formule:

$$Gd_{9,23}Ce_{0,1}(SiO_4)_6O_2$$

à partir de 553,91g de $Gd_2O_3$, 5,72g de $CeO_2$ et 119,36g de $SiO_2$. On prépare la poudre dans les mêmes conditions et on la transforme en un monocristal en opérant de la même façon que dans l'exemple 1.

Le cristal obtenu émet vers 410nm et sa vitesse de décroissance de la luminescence est de l'ordre de 27ns.

**Exemples 3 à 5 :** Monocristaux de $Ln_{9,23}Ce_{0,1}(SiO_4)_6O_2$ avec Ln représentant La (ex. 3) Yb (ex. 4) et Lu (ex. 5).

On suit le même mode opératoire que dans l'exemple 2 pour préparer une poudre de silicate de lanthanides, sauf que l'on utilise respectivement 498,91g de $La_2O_3$, 5,72g de $CeO_2$ et 119,62g de $SiO_2$ ou 645,45g de $Yb_2O_3$, 6,11g de $CeO_2$ et 127,94g de $SiO_2$ ou 655,25g de $Lu_2O_3$, 6,14g de $CeO_2$ et 128,63g de $SiO_2$.

On prépare ensuite le monocristal comme dans l'exemple 1 et on le soumet à un traitement thermique de recuit comme dans l'exemple 1. Les monocristaux obtenus sont tous des scintillateurs émettant vers 410nm et leur vitesse de décroissance de la luminescence est de l'ordre de 40ns.

**Exemple 6 :** Monocristal de $Gd_{9,13}Ce_{0,05}Tb_{0,15}(SiO_4)_6O_2$.

On suit le même mode opératoire que dans l'exemple 1, sauf qu'on part d'un mélange de poudres comprenant 547,91g de $Gd_2O_3$, 2,86g de $CeO_2$, 9,09g de $Tb_2O_3$ et 119,36g de $SiO_2$. On prépare ensuite à partir de la poudre obtenue un monocristal en suivant le même mode opératoire que dans l'exemple 1, puis on soumet le monocristal obtenu à un traitement thermique de recuit effectué à une température de 1200°C en atmosphère d'hydrogène pendant 48 heures.

On obtient ainsi un scintillateur émettant à une longueur d'onde de 500 à 550nm.

**Exemple 7 à 9**.

On prépare comme dans l'exemple 6, des monocristaux de $Ln_{9,13}Ce_{0,05}Tb_{0,15}(SiO_4)_6O_2$ avec Ln représentant La, Yb ou Lu. Les monocristaux obtenus après traitement thermique de recuit émettent à une longuer d'onde de 500 à 550nm.

**Exemple 10.**

On suit le même mode opératoire que dans l'exemple 1, pour préparer un monocristal de $Gd_{8,23}Lu$-$Ce_{0,1}(SiO_4)_6O_2$.

On prépare tout d'abord une poudre de silicate de lanthanide comme dans l'exemple 1 en partant de 498,51g de $Gd_2O_3$, 66,49g de $Lu_2O_3$, 120,48g de $SiO_2$, 5,75g de $CeO_2$.

On prépare ensuite un monocristal à partir de cette poudre en suivant le même mode opératoire que dans l'exemple 1 et en effectuant le traitement de recuit à une température de 1200°C, sous atmosphère d'hydrogène, pendant 48 heures.

Le monocristal obtenu est un scintillateur émettant à une longueur d'onde d'environ 410nm. Sa vitesse de décroissance de la luminescence est de 35ns.

**Exemples 11 à 13.**

On prépare comme dans l'exemple 9 des monocristaux de $Ln_{8,23}Ln'Ce_{0,1}(SiO_4)_6O_2$ avec Ln et Ln' représentant les lanthanides donnés dans le tableau 1 qui suit.

Ces monocristaux émettent également à une longueur d'onde d'environ 410nm. Leurs vitesses de décroissance sont données dans le tableau 1.

**Exemple 14.**

On suit le même mode opératoire que dans l'exemple 1 pour préparer un monocristal de $Gd_{8,18}LuCe_{0,05}Tb_{0,1}(SiO_4)_6O_2$.

On prépare tout d'abord une poudre de silicate de lanthanides comme dans l'exemple 1 en partant de 495,49g de $Gd_2O_3$, 66,49g de $Lu_2O_3$, 2,88g de $CeO_2$, 9,17g de $Tb_2O_3$ et 120,48g de $SiO_2$.

On prépare ensuite un monocristal à partir de cette poudre en suivant le même mode opératoire que dans l'exemple 1 et en effectuant le traitement de recuit à une température de 1200°C, sous atmosphère d'hydrogène, pendant 48 heures.

Le monocristal obtenu est un scintillateur émettant à une longueur d'onde située dans la gamme de 500 à 550nm.

Les monocristaux de silicates de lanthanides conformes à l'invention peuvent être utilisés comme scintillateurs dans un détecteur pour rayons X et/ou gamma. Un tel détecteur est représenté de façon schématique sur la figure annexée.

Sur cette figure, on voit que le détecteur comprend un scintillateur (1) et un photodétecteur (3) pour détecter la lumière provenant du scintillateur. Le scintillateur (1) est disposé dans une enveloppe (5) réalisé par exemple en aluminium et recouvert intérieurement d'un matériau réflecteur (7)tel que du sulfate de baryum. Lorsque le scintillateur (1) est irradié par un rayonnement gamma qui traverse l'enveloppe (5) en aluminium, de la lumière est produite par le scintillateur (3). La lumière émise se dirige dans toutes les directions mais elle est réfléchie par le matériau réflecteur (7) et introduite dans le photomultiplicateur (3), l'amplificateur (9) amplifie la sortie du photomultiplicateur (3).

Le détecteur décrit ci-dessus peut être utilisé en particulier en imagerie médicale par tomographie d'émission de positons. Dans cette méthode de diagnostic, des éléments émetteurs de positons sont incorporés à la place de leurs isotopes naturels dans des molécules biologiques que l'on injecte au patient. On repère ensuite la présence de ces molécules ou de leurs métabolites dans une région du corps par les émissions de positons dont on détecte les photons d'annihilation, c'est-à-dire des rayons gamma, à l'aide de paires de monocristaux de silicates de lanthanides conformes à l'invention.

On peut aussi utiliser le détecteur décrit ci-dessus dans les puits de forage pour détecter les rayonnements X et/ou gamma émis, après irradiation préalable, par les différentes couches géologiques, ce qui permet d'identifier ces couches géologiques.

Un appareillage comportant un scintillateur pour la prospection pétrolière est décrit par exemple dans le brevet EP-A- 231693.

**Tableau 1**

$Ln_{8,23}\ Ln'_1\ Ce_{0,1}\ (SiO_4)_6O_2$

| Ex | Ln | Ln' | Vitesse de décroissance (ns) |
|---|---|---|---|
| 11 | Gd | Yb | 35 |
| 12 | La | Lu | 40 |
| 13 | La | Yb | 40 |

## Revendications

1. Monocristal de silicate de lanthanide utilisable comme scintillateur pour la détection des rayonnements X et/ou gamma, caractérisé en ce que le silicate de lanthanide répond à la formule :

$$(Ln_{1-x_1-x_2-x_3}Ln'_{x_1}Ce_{x_2}Tb_{x_3})_{9,33}(SiO_4)_6O_2$$

dans laquelle Ln et Ln' qui sont différents, représentent un élément des terres rares choisi parmi La, Gd, Yb et Lu, et $x_1$, $x_2$ et $x_3$ sont tels que

$$0 \leqq x_1 < 1$$
$$0 \leqq x_2 \leqq 0{,}05$$
$$0 \leqq x_3 \leqq 0{,}05$$
$$0 < x_2 + x_3 \leqq 0{,}1$$
$$0 < x_1 + x_2 + x_3 < 1$$

2. Monocristal de silicate de lanthanides selon la revendication 1, caractérisé en ce que $x_1$ et $x_3$ sont égaux à 0.

3. Monocristal de silicate de lanthanides selon la revendication 2, caractérisé en ce que $0{,}005 \leqq x_2 \leqq 0{,}02$.

4. Monocristal de silicate de lanthanide selon la revendication 1, caractérisé en ce que $x_1$ est égal à 0.

5. Monocristal selon la revendication 4, caractérisé en ce que $x_2$ et $x_3$ sont tels que

$$0{,}003 \leqq x_2 \leqq 0{,}01$$
$$0{,}005 \leqq x_3 \leqq 0{,}002.$$

6. Monocristal selon la revendication 1, caractérisé en ce que $x_3$ est égal à 0.

7. Monocristal selon la revendication 6, caractérisé en ce que $x_1$ et $x_2$ sont tels que

$$0{,}05 \leqq x_1 \leqq 0{,}2$$
$$0{,}005 \leqq x_2 \leqq 0{,}02 \text{ avec } 0{,}055 \leqq x_1 + x_2 \leqq 0{,}22.$$

8. Monocristal selon la revendication 1, caractérisé en ce que $x_1$, $x_2$ et $x_3$ sont supérieurs à 0.

9. Monocristal selon la revendication 8, caractérisé en ce que $x_1$, $x_2$ et $x_3$ sont tels que :

$$0{,}05 \leqq x_1 \leqq 0{,}2$$
$$0{,}003 \leqq x_2 \leqq 0{,}01$$
$$0{,}005 \leqq x_3 \leqq 0{,}02.$$

10. Détecteur de rayons x et/ou gamma comprenant un scintillateur et un photodétecteur pour détecter la lumière provenant du scintillateur, caractérisé en ce que le scintillateur est constitué par un monocristal de silicate de lanthanides selon l'une quelconque des revendications 1 à 9.

## Claims

1. Lanthanide silicate monocrystal usable as a scintillator for the detection of X and/or gamma radiation, characterized in that the lanthanide silicate complies with the formula:

$$(Ln_{1-x_1-x_2-x_3}Ln'_{x_1}Ce_{x_2}Tb_{x_3})_{9.33}(SiO_4)_6O_2$$

in which Ln and Ln', which differ from one another, represent a rare earth element chosen from among La, Gd, Yb and Lu, and $x_1$, $x_2$ and $x_3$ are such that

$$0 \leqq x_1 < 1$$
$$0 \leqq x_2 \leqq 0.05$$
$$0 \leqq x_3 \leqq 0.05$$
$$0 < x_2 + x_3 \leqq 0.1$$
$$0 < x_1 + x_2 + x_3 < 1$$

2. Lanthanide silicate monocrystal according to claim 1, characterized in that $x_1$ and $x_3$ are equal to 0.

3. Lanthanide silicate monocrystal according to claim 2, characterized in that $0.005 \leqq x_2 \leqq 0.02$.

4. Lanthanide silicate monocrystal according to claim 1, characterized in that $x_1$ is equal to 0.

5. Monocrystal according to claim 4, characterized in that $x_2$ and $x_3$ are such that

$$0.003 \leqq x_2 \leqq 0.01$$
$$0.005 \leqq x_3 \leqq 0.002$$

6. Monocrystal according to claim 1, characterized in that $x_3$ is equal to 0.

7. Monocrystal according to claim 6, characterized in that $x_1$ and $x_2$ are such that

$$0.05 \leqq x_1 \leqq 0.2$$
$$0.005 \leqq x \leqq 0.02 \text{ with } 0.055 \leqq x_1 + x_2 \leqq 0.22.$$

8. Monocrystal according to claim 1, characterized in that $x_1$, $x_2$ and $x_3$ are greater than 0.

9. Monocrystal according to claim 8, characterized in that $x_1$, $x_2$ and $x_3$ are such that:

$$0.05 \leqq x_1 \leqq 0.2$$
$$0.003 \leqq x2 = 0.01$$
$$0.005 \leqq x_3 \leqq 0.02$$

10. X and/or gamma ray detector comprising a scintillator and a photodetector for detecting the light coming from the scintillator, characterized in that the scintillator is constituted by a lanthanide silicate monocrystal according to any one of the claims 1 to 9.

## Patentansprüche

1. Als Szintillator zum Nachweis von Röntgen- und/oder Gammastrahlen geeigneter Lanthanidensilikat-Einkristall, dadurch gekennzeichnet, daß das Lanthanidensilikat der Formel

$$(Ln_{1-x_1-x_2-x_3}Ln'_{x_1}Ce_{x_2}Tb_{x_3})_{9,33}(SiO_4)_6O_2$$

entspricht, in welcher Ln und Ln', welche verschieden sind, ein aus La, Gd, Yb und Lu ausgewähltes Seltenerdelement bedeuten und $x_1$, $x_2$ und $x_3$ derart sind, daß

$$0 \leqq x_1 < 1$$
$$0 \leqq x_2 \leqq 0{,}05$$
$$0 \leqq x_3 \leqq 0{,}05$$
$$0 < x_2 + x_3 \leqq 0{,}1$$
$$0 < x_1 + x_2 + x_3 < 1$$

2. Lanthanidensilikat-Einkristall gemäß Anspruch 1, dadurch gekennzeichnet, daß $x_1$ und $x_3$ gleich 0 sind.

3. Lanthanidensilikat-Einkristall gemäß Anspruch 2, dadurch gekennzeichnet, daß $0{,}005 \leqq x_2 \leqq 0{,}02$.

4. Lanthanidensilikat-Einkristall gemäß Anspruch 1, dadurch gekennzeichnet, daß $x_1$ gleich 0 ist.

5. Lanthanidensilikat-Einkristall gemäß Anspruch 4, dadurch gekennzeichnet, daß $x_2$ und $x_3$ derart sind, daß

$$0{,}003 \leqq x_2 \leqq 0{,}01$$
$$0{,}005 \leqq x_3 \leqq 0{,}002$$

6. Lanthanidensilikat-Einkristall gemäß Anspruch 1, dadurch gekennzeichnet, daß $x_3$ gleich 0 ist.

7. Lanthanidensilikat-Einkristall gemäß Anspruch 6, dadurch gekennzeichnet, daß $x_1$ und $x_2$ derart sind, daß

$$0{,}05 \leqq x_1 \leqq 0{,}2$$
$$0{,}005 \leqq x_2 \leqq 0{,}02 \text{ mit } 0{,}055 \leqq x_1 + x_2 \leqq 0{,}22.$$

8. Lanthanidensilikat-Einkristall gemäß Anspruch 1, dadurch gekennzeichnet, daß $x_1$, $x_2$ und $x_3$ größer als 0 sind.

9. Lanthanidensilikat-Einkristall gemäß Anspruch 8, dadurch gekennzeichnet, daß $x_1$, $x_2$ und $x_3$ derart sind, daß

$$0{,}05 \leqq x_1 \leqq 0{,}2$$
$$0{,}003 \leqq x_2 \leqq 0{,}01$$

$$0{,}005 \leqq x_3 \leqq 0{,}02$$

**10.** Röntgen- und/oder Gammastrahlendetektor, umfassend einen Szintillator und einen Photodetektor zum Nachweisen der von dem Szintillator ausgehenden Strahlung, dadurch gekennzeichnet, daß der Szintillator aus einem Lanthanidensilikat-Einkristall gemäß einem der Ansprüche 1 bis 9 besteht.

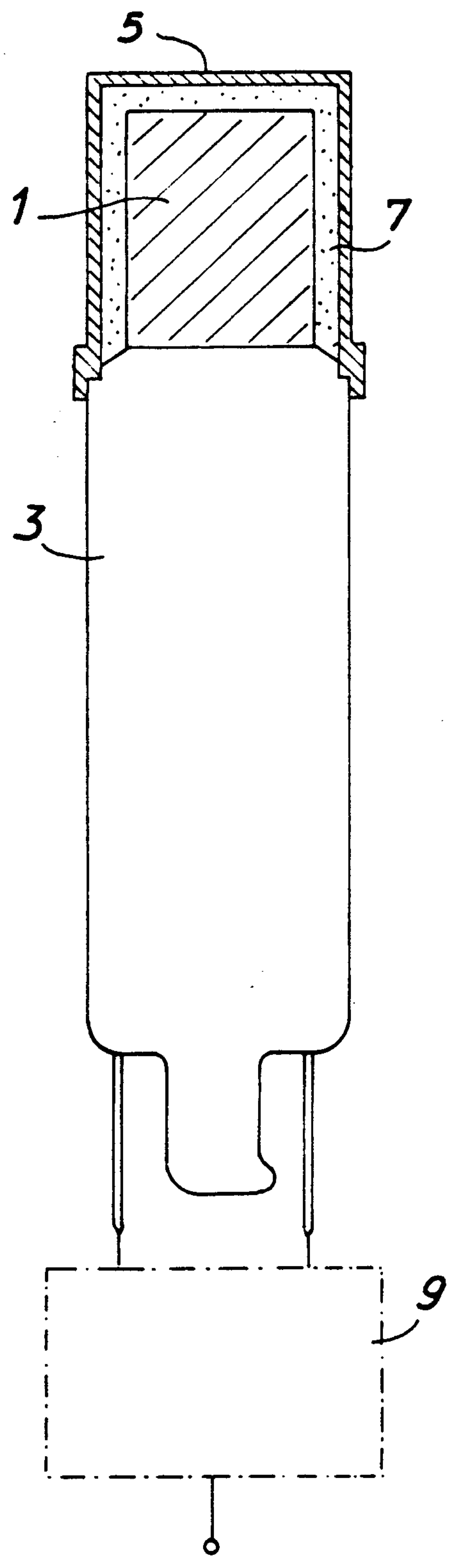
5
1
7
3
9